# EUROPÄISCHE PATENTANMELDUNG

(11) **EP 2 169 240 A1**
(43) Veröffentlichungstag der Anmeldung: **31.03.2010**
(21) Anmeldenummer: 08105443.9
(22) Anmeldetag: 26.09.2008
(51) Int. Cl.: F16B 7/04, F16B 12/44

(54) **Profilkonstruktion für Möbel und Verwendung einer Profilkonstruktion für Möbel**

(71) Anmelder: B+W Stuhl-Tisch Zentrum International GmbH, 65779 Kelkheim (DE)
(72) Erfinder: Dubach, Fredi, 8345 Adetswil (CH)
(74) Vertreter: Troesch Scheidegger Werner AG

(57) **Zusammenfassung**

Eine vorliegende Profilkonstruktion für Möbel weist einen Rahmen mit Beinprofilen auf. Weiter sind Verbindungselemente (3) vorgesehen, welche in montiertem Zustand einerseits in den Rahmen und andererseits in ein Beinprofil eingeführt und fest verriegelt sind, wobei ein Verbindungselement (3) mindestens zwei Leisten (9,9') mit an einem gemeinsamen Ende beabstandeten Endungen (5,5') aufweist, welche in dazu korrespondierende Mündungen des jeweiligen Beinprofils eingreifen. Weiter ist ein Spreizmittel (24) am Verbindungselement (3) angeordnet, um den Abstand zwischen den beiden Endungen (5,5') einzustellen und dadurch eine einfache Montage der erfindungsgemässen Profilkonstruktion für Möbel bewirkt. Die Profilkonstruktion weist dabei eine grosse Stabilität und Festigkeit auf und kann auch einfach wieder demontiert werden.

## Beschreibung

Die vorliegende Erfindung betrifft eine Profilkonstruktion für Möbel nach dem Oberbegriff von Anspruch 1 sowie eine Verwendung einer Profilkonstruktion für Möbel nach dem Oberbegriff von Anspruch 13.

Solche Profilkonstruktionen können für Möbel, Möbelsysteme wie z.B. Tische, Stühle, Regale, Betten oder Kommoden in den verschiedensten Bereichen, wie Büro, Küche, Schulen, Labors oder Werkstätten als Möbelbeschlag zum Einsatz kommen. Es sind auch Aufbauten in Form eines Regals oder Regalssystems über einem Tisch, einem Schreibpult oder über sonstigen Arbeitsflächen denkbar.

Die Aufgabe der vorliegenden Erfindung bestand darin, eine Profilkonstruktion für Möbel bereitzustellen, welche einfach, zeitsparend und sicher montiert werden kann.

Die Aufgabe wird erfindungsgemäss durch eine Profilkonstruktion für Möbel nach den Merkmalen von Anspruch 1 gelöst. Weitere, erfindungsgemässe Ausführungsformen ergeben sich aus den Merkmalen der weiteren Ansprüche 2 bis 12. Weiter wird in Anspruch 13 die Verwendung einer Profilkonstruktion für Möbel nach einem der Ansprüche 1 bis 12 angegeben.

Eine erfindungsgemässe Profilkonstruktion für Möbel weist einen Rahmen und Beinprofilen auf, weiter sind Verbindungselemente vorgesehen, welche in montiertem Zustand einerseits in den Rahmen und andererseits in ein Beinprofil eingeführt und fest verriegelbar sind, wobei ein Verbindungselement mindestens zwei Leisten mit an einem gemeinsamen Ende beabstandeten Endungen aufweist, welche in dazu korrespondierende Mündungen des jeweiligen Beinprofils eingreifen und dass ein Spreizmittel am Verbindungselement angeordnet ist, um den Abstand zwischen den beiden Endungen einzustellen und dadurch eine einfache Montage der erfindungsgemässen Profilkonstruktion für Möbel bewirkt. Die Profilkonstruktion weist dabei eine grosse Stabilität und Festigkeit auf und kann auch einfach wieder demontiert werden.

In einer Ausführungsform der Profilkonstruktion für Möbel ist das Spreizmittel eine Schraube oder Schraubbolzen und dieses ist in einer an der einen Leiste ausgebildeten entsprechenden durchgehenden Schraubbohrung angeordnet, wobei der Fuss der Schraube oder Schraubbolzen gegen die andere Leiste in Anschlag gelangt. Dadurch werden die Leisten auseinandergespreizt und zwar derart, dass eine stufenlose Anpassung möglich ist. Die Bedienung ist dabei mit einfachem Werkzeug und auch einhändig machbar.

In einer weiteren Ausführungsform der Profilkonstruktion für Möbel zeigen die voneinander abstehenden Endungen eine tulpen- oder trichterförmige Ausgestaltung und weisen einen im Wesentlichen rechteckigen Querschnitt auf. Durch das Reckechtprofil wird ein Verdrehen gegenüber dem Beinprofil verhindert. Die Endungen sind in das korrespondierende Beinprofil einführbar und greifen in Mündungen dieses Beinprofils ein.

In einer weiteren Ausführungsform der Profilkonstruktion für Möbel weist der Querschnitt des Beinprofils eine 2-artige Form oder eine S-ähnliche Form auf. Dadurch wird bewirkt, dass mindestens eine Hohlseite des Profils als Kabelkanal oder für die Durchführung von Schläuchen mit Luft oder Gasen nutzbar ist.

In einer weiteren Ausführungsform der Profilkonstruktion für Möbel ist ein Abschnitt x von der Endung der Leiste in einem Winkel α zwischen 0° und 180°, vorzugsweise zwischen 0° und 90°, von einer Achse A weggebogen und ein weiterer Abschnitt y des Endung der Leiste zeigt gerade oder daumenartig von der Achse A weg.

In einer weiteren Ausführungsform der Profilkonstruktion für Möbel sind die Beinprofile auf mindestens einer Seite über mindestens einen Bereich ihrer Länge offen ausgebildet. Dadurch sind die Endungen der Leisten des Verbindungselements auf einfache Weise in das Beinprofil einführbar und entlang des Beinprofils stufenlos in der Höhe des Beines verschiebbar. Dadurch wird es auch möglich, im Falle eines unebenen Bodens plattenartige Elemente der Möbel (z.B. Tischplatte eines Tisches) zwischen zwei aneinander grenzenden Möbeln bündig auszurichten, damit eine gerade ebene Fläche entsteht, indem beispielsweise das plattenartige Element (z.B. Tischplatte) auf der einen Seite des Rahmens des Möbels (z.B. Tisch) etwas höher als auf der gegenüberliegenden Seite des Rahmens angebracht wird. Die Neigung des plattenförmigen Elements gegenüber dem Boden kann dabei zwischen 1° und 2° betragen.

In einer weiteren Ausführungsform der Profilkonstruktion für Möbel ist ein Rahmenende mit einem daraus hervorstehenden Verbindungselement im montiertem Zustand in mindestens eine der offen ausgebildeten Seiten des Beinprofils hinein positioniert.

In einer weiteren Ausführungsform der Profilkonstruktion für Möbel weisen die Beinprofile Durchlässe oder Ausnehmungen auf. Dadurch wird bewirkt, dass beispielsweise Kabel oder Schläuche, welche in einen Kabelkanal im Boden oder in einer Wand geführt werden sollen, auf der gewünschten Höhe in den Durchlässen oder Ausnehmungen befestigbar bzw. einhängbar sind und nach Bedarf zwischen den Tischbeinen hindurch beispielsweise über ein weiteres Beinprofil in den gewünschten Kabelkanal im Boden oder in der Wand oder eines anderen Kabelkanals eines Beinprofils geführt werden können.

In einer weiteren Ausführungsform der Profilkonstruktion für Möbel sind Beinprofile, Spreizmittel, Verbindungselemente und Rahmen entweder aus Metall und/oder Kunststoff und/oder Holz.

In einer noch weiteren Ausführungsform der Profilkonstruktion für Möbel weist der Rahmen Ausnehmungen für die Aufnahme von Befestigungsmitteln für die Verbindungselemente, wie Schrauben, auf.

In einer weiteren Ausführungsform der Profilkonstruktion für Möbel, weist diese weiter mindestens einen Befestigungsbeschlag auf, welcher in ein Beinprofil einführbar und dort kraftschlüssig verriegelbar ist.

In einer weiteren Ausführungsform weist der Befestigungsbeschlag eine Klemmschraube, eine Befestigungsplatte mit einem Bohrloch zur Aufnahme der Klemmschraube sowie Befestigungslöcher auf. Dadurch werden Platten, wie z.B. in Form von Brettern, Regalablagen oder Abdeckungen anbringbar.

In einer weiteren Ausführungsform wird eine Verwendung einer Profilkonstruktion für Möbel für einen Tisch oder einen Stuhl oder ein Regal oder ein Bett oder eine Kommode gezeigt.

Ausführungsbeispiele der vorliegenden Erfindung werden nachstehend anhand von Figuren noch näher erläutert. Es zeigen:
- Fig. 1:: Übersicht einer erfindungsgemässen Profilkonstruktion für Möbel, dargestellt als Explosionszeichnung insbesondere für einen Tisch;
- Fig. 2a:: perspektivische Darstellung einer erfindungsgemässen Profilkonstruktion für Möbel;
- Fig. 2b:: Explosionszeichnung eines Verbindungselementes der erfindungsgemässen Profilkonstruktion für Möbel;
- Fig. 3:: Draufsicht einer erfindungsgemässen Profilkonstruktion für Möbel;
- Fig. 4a:: perspektivische Darstellung einer erfindungsgemässen Profilkonstruktion für Möbel für ein Regal oder Regalsystem;
- Fig. 4b:: Draufsicht eines Verbindungselementes der erfindungsgemässen Profilkonstruktion für Möbel für ein Regal oder Regalsystem;
- Fig. 5a:: perspektivische Darstellung einer erfindungsgemässen Profilkonstruktion für Möbel für einen Aufbau in Form eines Regals oder Regalssystems über einem Tisch oder einem Schreibpult;
- Fig. 5b:: Draufsicht eines Verbindungselementes der erfindungsgemässen Profilkonstruktion für Möbel für ein Regal oder Regalsystem;
- Fig. 6a:: Draufsicht einer erfindungsgemässen Profilkonstruktion für Möbel mit einem Befestigungsbeschlag; und
- Fig. 6b:: Draufsicht gemäss Fig. 6a, in welcher eine Klemmschraube teilweise durch eine Befestigungsplatte in abgedeckter Weise dargestellt ist.

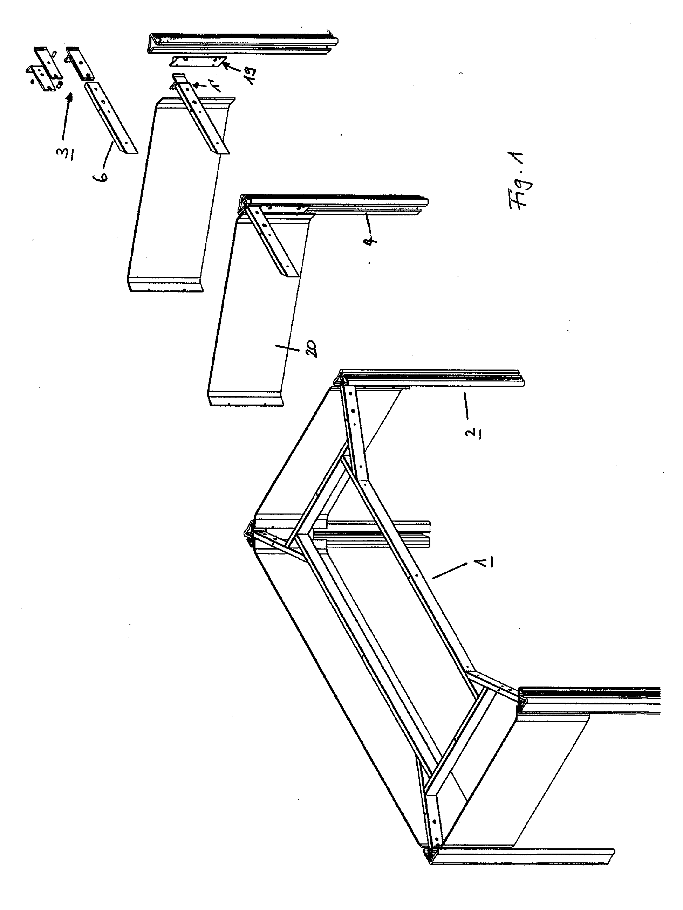

In Figur 1 ist eine Übersicht einer erfindungsgemässen Profilkonstruktion für Möbel, dargestellt als Explosionszeichnung für einen Tisch mit einem Rahmen 1, Beinen 2 und einem nicht dargestellten plattenartigem Element 18, wie z.B. einer Tischplatte 18'. Weiter sind ein hohl ausgebildetes Rahmenprofil 6 mit einem viereckigen, rautenförmigen oder runden Querschnitt, ein Verbindungselement 3 und Beinprofile 4 dargestellt. Ein Rahmenende 1' mit dem daraus hervorstehenden Verbindungselement 3 ist im montiertem Zustand in mindestens eine der offen ausgebildeten Seiten des jeweiligen Beinprofils 4 hinein positioniert. Weiter ist ein Befestigungsbeschlag 19 für das Anbringen beispielsweise einer Platte 20 gezeigt. Es ist aber auch denkbar, dass beispielsweise Regalablagen an Regalen oder Verkleidungen an Möbeln mittels dieses Befestigungsbeschlags 19 an Beinprofilen 4 anbringbar sind.

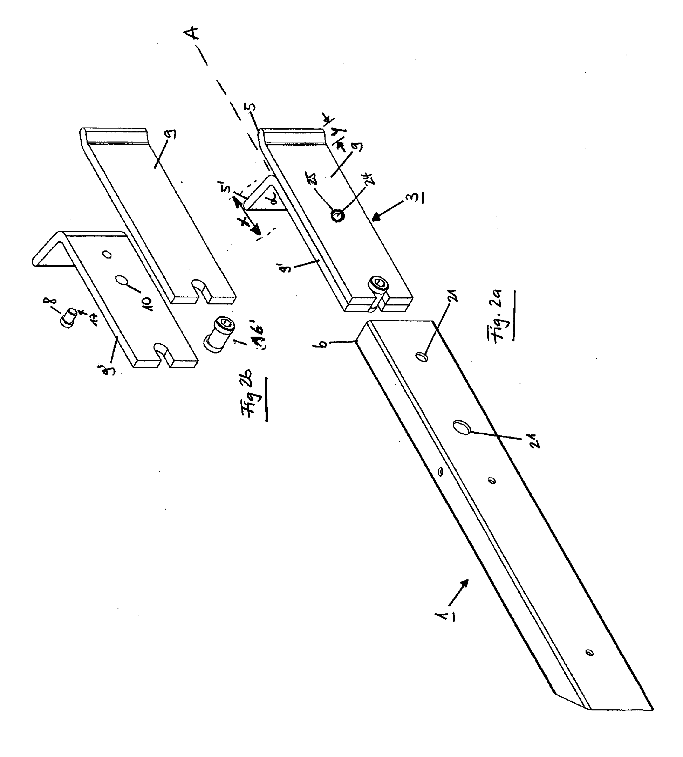

Fig. 2a stellt eine perspektivische Darstellung einer erfindungsgemässen Profilkonstruktion für Möbel dar. Fig. 2a zeigt einen Teil eines Rahmens 1 mit einem Rahmenprofil 6, Ausnehmungen 21 im Rahmen 1 für das Anbringen von Spreizmitteln 8 (nicht dargestellt in Fig. 2a). Weiter ist in Fig. 2a das Verbindungselement 3 gezeigt, welches zwei Leisten 9, 9' mit voneinander abstehenden Endungen 5, 5' aufweist. Die Leisten 9, 9' können beispielsweise über mindestens ein Bohrloch 25 in den Leisten 9, 9' durch welche ein Stift 24 geführt wird, lose miteinander verbunden werden, um die Montage der erfindungsgemässen Verbindungskonstruktion für eine Profilkonstruktion zu erleichtern. Das Verbindungselement 3 ist in ein Rahmenprofil 6 einführbar. Der Rahmen 1 zeigt Ausnehmungen 21 für die Aufnahme von Befestigungsmitteln 22 (nicht dargestellt in Fig. 2a). Weiter ist aus Fig. 2a ersichtlich, dass ein Abschnitt x von der Endung 5' der Leiste 9' in einem Winkel α zwischen 0° und 180°, vorzugsweise zwischen 0° und 90°, von einer Achse A weggebogen und ein weiterer Abschnitt y des Endung 5 der Leiste 9 zeigt gerade oder daumenartig von der Achse A weg. Die einfache Form der Leisten 9, 9' aus rechteckigem Bandmaterial mit abgebogenen Enden ermöglicht eine einfache und kostengünstige Herstellung derselben.

Fig. 2b stellt eine Explosionszeichnung eines Verbindungselementes der erfindungsgemässen Profilkonstruktion für Möbel dar. Weiter wird in Fig. 2b ein Spreizmittel 8 gezeigt, welches in Form einer Schraube 11 oder eines Schraubbolzens 16 ausgebildet ist und vorzugsweise in einer an einer Leiste 9' ausgebildeten Schraubbohrung 10 angeordnet ist, wobei ein Fuss 17 der Schraube 11 oder Schraubbolzen 16 gegen die andere Leiste 9 in Anschlag gelangt. Weiter ist ein weiterer Schraubbolzen 16' gezeigt. Dieser Schraubbolzen 16' dient der relativen Justierung der Leiste 9 und Leiste 9' zueinander und hat die Wirkung eines Exzenters. Dadurch ist eine einfache Einstellbarkeit der erfindungsgemässen Profilkonstruktion gewährleistet.

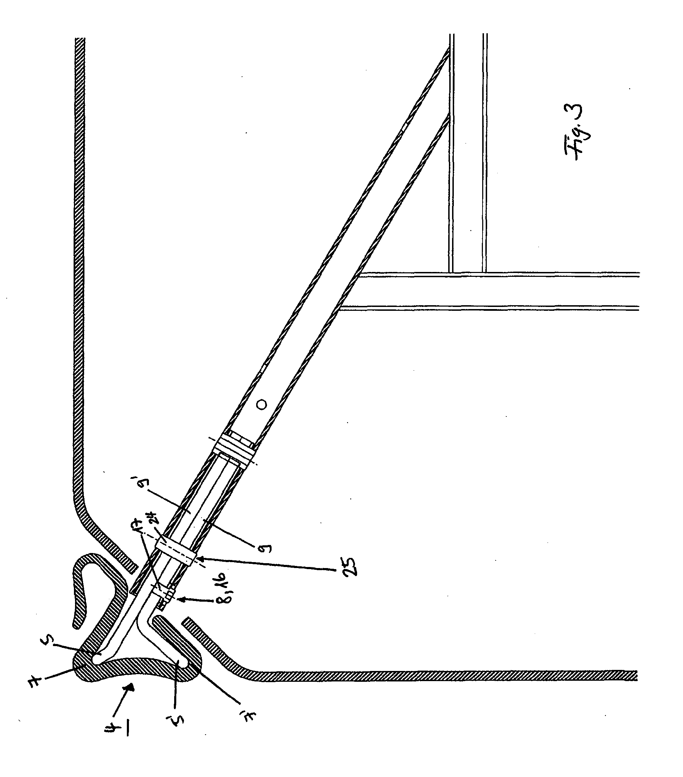

Fig. 3 zeigt eine Draufsicht einer erfindungsgemässen Profilkonstruktion für Möbel in nicht gespreiztem Zustand. Die Endungen 5, 5' der Leisten 9, 9' greifen in dazu korrespondierende Mündungen 7, 7' des Beinprofils 4 ein. Das S-artige oder 2-artige Form, d.h. in Form der Zahl 2, ausgebildete Beinprofil 4 ist mindestens auf einer Seite offen ausgebildet. In nicht gespreiztem Zustand sind die Leisten 9, 9' parallel zueinander. Wird der Fuss 17 der Schraube 8 oder des Schraubbolzen 16 durch Festschrauben gegen die Leiste 9' in Anschlag gebracht, so spreizen sich die Leisten 9, 9' auseinander, wodurch zwischen den Leisten ein Spalt S gebildet wird (nicht dargestellt in Fig. 3). Dabei wird der Abstand zwischen den Endungen 5, 5' der Leisten 9, 9' eingestellt und die Endungen 5, 5' greifen passgenau in die Mündungen 7, 7' des Beinprofils 4 ein. Wie schon in Figur 1 gezeigt, ist auch in Fig. 3 der Stift 24, welcher durch das Bohrloch 25 in den Leisten 9, 9' geführt wird dargestellt.

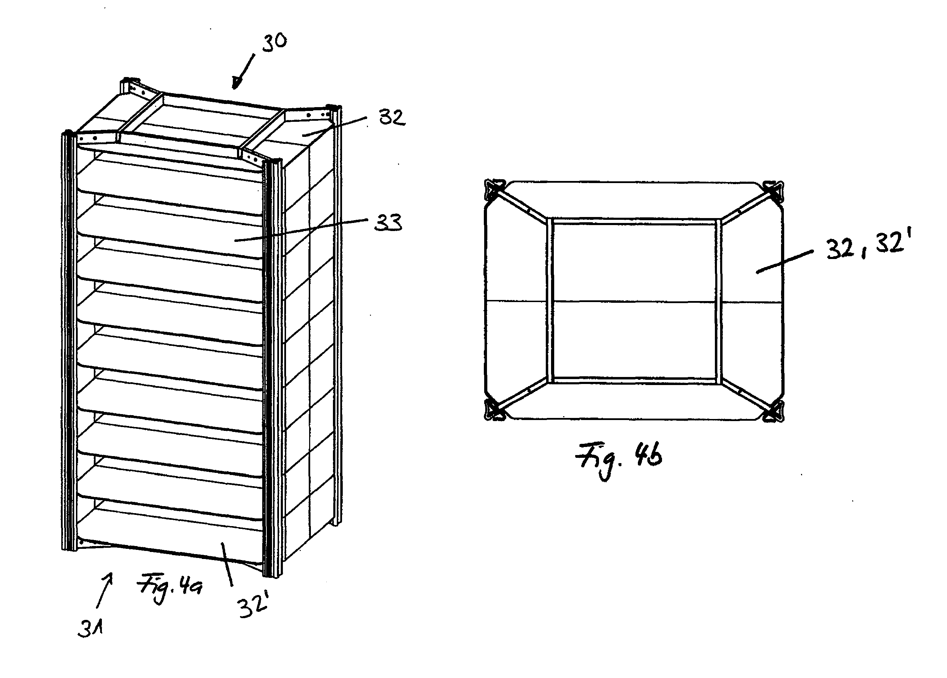

Fig. 4a zeigt eine perspektivische Darstellung einer erfindungsgemässen Profilkonstruktion für Möbel für ein Regal oder Regalsystem. Je nach Höhe resp. Grösse des Regals werden an der oberen bzw. unteren Regalseite 30, 31 Rahmen 1 eingesetzt. Es ist aber auch denkbar, dass diese bei Bedarf zusätzlich Rahmen 1 zwischen den Regalablagen 33 angeordnet werden. Weiter sind in Fig. 4a Regalbodenplatten 32, 32' gezeigt.

Fig. 4b stellt die Draufsicht auf die erfindungsgemässe Profilkonstruktion für Möbel für ein Regal oder Regalsystem nach Fig. 4a dar. Die einzelnen Ebenen des Regalsystems sind dabei beispielsweise jeweils aus zwei symmetrisch ausgebildeten Regalbodenplatten (32, 32') gebildet und können seitlich und hinten mit Wandelementen abgeschlossen sein.

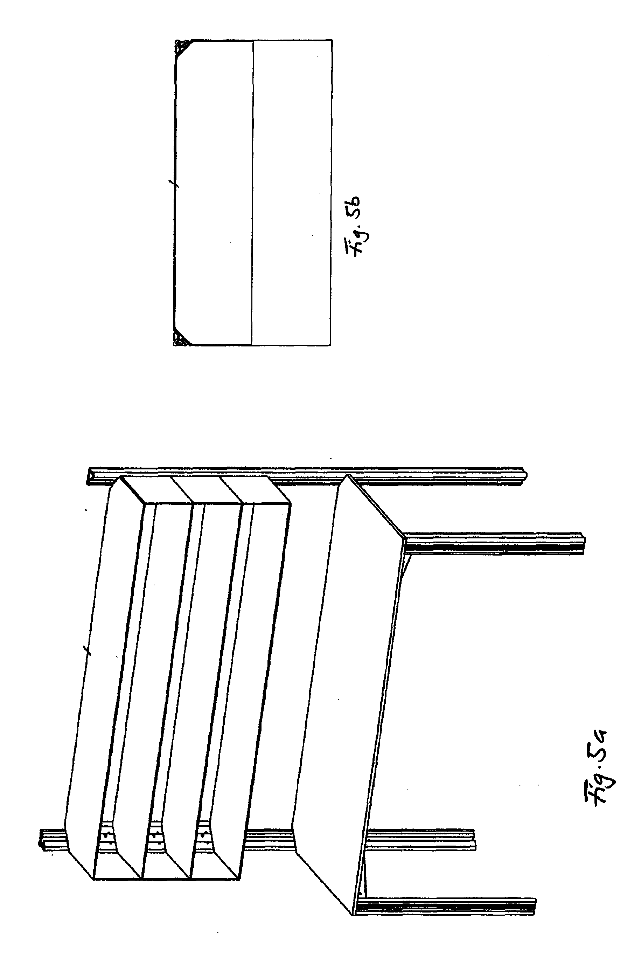

Fig. 5a stellt eine perspektivische Darstellung einer erfindungsgemässen Profilkonstruktion für Möbel für einen Aufbau in Form eines Regals oder Regalssystems mit integriertem Tisch oder einem Schreibpult dar.

Fig. 5b schliesslich zeigt eine Draufsicht eines Verbindungselementes der erfindungsgemässen Profilkonstruktion für Möbel für ein Regal oder Regalsystem nach Fig. 5a.

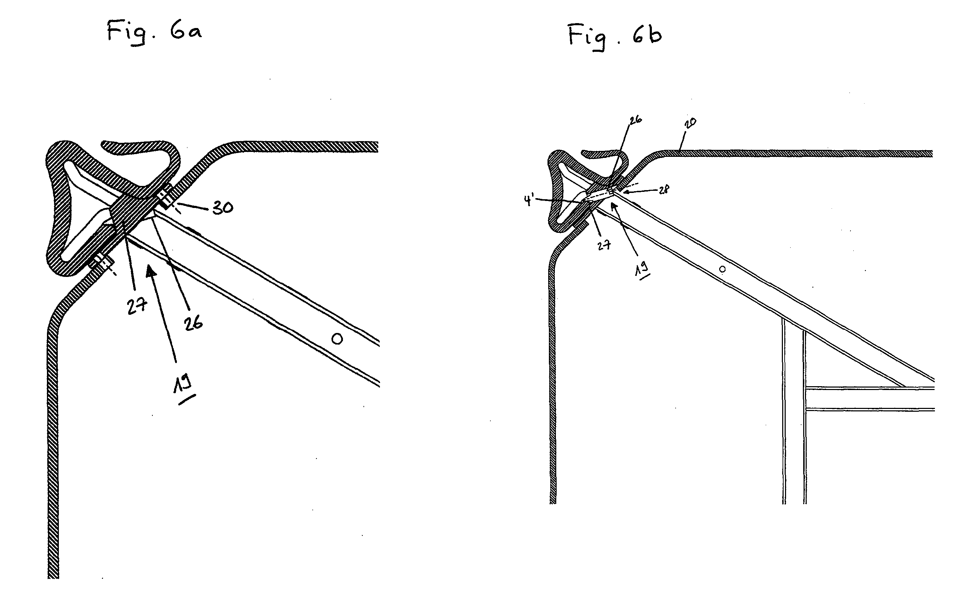

Fig. 6a zeigt eine Draufsicht eines Befestigungsbeschlages 19 einer Profilkonstruktion der erfindungsgemässen Profilkonstruktion für Möbel. Daraus ist ersichtlich, dass eine Klemmschraube 26 zur kraftschlüssigen Befestigung einer Befestigungsplatte 27 an einer offenen Seite des Beinprofils 4 anbringbar ist. Die Spitze der Klemmschraube 26 ragt dabei soweit aus dem Bohrloch 28 der Befestigungsplatte 27 hinaus, dass die Spitze der Klemmschraube auf einem Profilende 4' des Beinprofils 4 gelagert wird. Eine Seite der Befestigungsplatte 27 ist derart geformt, dass diese der Form einem offenen Ende des Beinprofils 4 entspricht und dabei mindestens teilweise ins Innere des Beinprofils 4 ragt, diese Seite kann beispielsweise als trapezförmige Erhebung ausgebildet sein. Weiter kann die Befestigungsplatte 27 aus Kunststoff, Metall oder Holz sein und Befestigungslöcher 29 aufweisen. Aus Fig. 6a ist auch ersichtlich, dass mit Hilfe des Befestigungsbeschlags 19 die Platten 20 in Form einer Abdeckung am Beinprofil 4 angebracht ist.

Fig. 6b stellt eine Draufsicht gemäss Fig. 6a dar, in welcher die Klemmschraube 26 durch die Befestigungsplatte 27 teilweise in abgedeckter Weise dargestellt ist. Hier ist dargestellt, dass die Platte 20 in Form einer Abdeckung mit der oberen Regalseite 30 am Befestigungsbeschlag 19 ist. An die Befestigungsbeschläge 19 können auch die Regalbodenplatten 32, 32' (siehe auch Fig. 4) befestigt werden.

## Patentansprüche

1. Profilkonstruktion für Möbel mit einem Rahmen (1) und mit Beinprofilen (4), **dadurch gekennzeichnet, dass** Verbindungselemente (3) vorgesehen sind, welche in montiertem Zustand einerseits in den Rahmen (1) und andererseits in ein Beinprofil (4) eingeführt und fest verriegelbar sind, wobei ein Verbindungselement (3) mindestens zwei Leisten (9; 9') mit an einem gemeinsamen Ende beabstandeten Endungen (5; 5') aufweist, welche in dazu korrespondierende Mündungen (7; 7') des jeweiligen Beinprofils (4) eingreifen und dass ein Spreizmittel (8) am Verbindungselement (3) angeordnet ist, um den Abstand zwischen den beiden Endungen (5; 5') einzustellen.

2. Profilkonstruktion für Möbel nach Anspruch 1, **dadurch gekennzeichnet, dass** das Spreizmittel (8) eine Schraube (11) oder Schraubbolzen (16) ist und in einer an der einen Leiste (9') ausgebildeten entsprechenden durchgehenden Schraubbohrung (10) angeordnet ist, wobei der Fuss (17) der Schraube (11) oder Schraubbolzen (16) gegen die andere Leiste (9) in Anschlag gelangt.

3. Profilkonstruktion für Möbel nach Anspruch 1 oder 2, **dadurch gekennzeichnet, dass** die voneinander abstehenden Endungen (5, 5') eine tulpen- oder trichterförmige Ausgestaltung zeigen und einen im Wesentlichen rechteckigen Querschnitt aufweisen.

4. Profilkonstruktion für Möbel nach einem der Ansprüche 1 bis 3, **dadurch gekennzeichnet, dass** der Querschnitt der Beinprofile (4) eine 2-artige Form oder eine S-ähnliche Form aufweist.

5. Profilkonstruktion für Möbel nach einem der Ansprüche 1 bis 4, **dadurch gekennzeichnet, dass** ein Abschnitt x vom Endung (5') der Leiste (9') in einem Winkel α zwischen 0° und 180°, vorzugsweise zwischen 0° und 90°, von einer Achse A weggebogen ist und ein weiterer Abschnitt y des Endung (5) der Leiste (9) gerade oder daumenartig von einer Achse B wegzeigt.

6. Profilkonstruktion für Möbel nach einem der Ansprüche 1 bis 5, **dadurch gekennzeichnet, dass** die Beinprofile (4) auf mindestens einer Seite über mindestens einen Bereich ihrer Länge offen ausgebildet sind.

7. Profilkonstruktion für Möbel nach einem der Ansprüche 1 bis 6, **dadurch gekennzeichnet, dass** jeweils ein Rahmenende (1') mit einem daraus hervorstehenden Verbindungselement (3) im montiertem Zustand in mindestens eine der offen ausgebildeten Seiten des jeweiligen Beinprofils (4) hinein positioniert ist.

8. Profilkonstruktion für Möbel nach einem der vorangehenden Ansprüche 1 bis 7, **dadurch gekennzeichnet, dass** die Beinprofile (4) Durchlässe (13) oder Ausnehmungen (14) aufweisen.

9. Profilkonstruktion für Möbel nach einem der Ansprüche 1 bis 8, **dadurch gekennzeichnet, dass** die Beinprofile (4), Spreizmittel (8), Verbindungselemente (3) und Rahmen (1) entweder aus Metall und/oder Kunststoff und/oder Holz sind.

10. Profilkonstruktion für Möbel nach einem der Ansprüche 1 bis 9, **dadurch gekennzeichnet, dass** der Rahmen (1) Ausnehmungen (21) für die Aufnahme von Befestigungsmitteln (22) für die Verbindungselemente (3), wie Schrauben (23), aufweist.

11. Profilkonstruktion für Möbel nach einem der Ansprüche 1 bis 10, **dadurch gekennzeichnet, dass** sie weiter mindestens einen Befestigungsbeschlag (19) aufweist, welcher in ein Beinprofil (4) einführbar und dort kraftschlüssig verriegelbar ist.

12. Profilkonstruktion für Möbel nach Anspruch 11, **dadurch gekennzeichnet, dass** der Befestigungsbeschlag (19) eine Klemmschraube (26), eine Befestigungsplatte (27) mit einem Bohrloch (28) zur Aufnahme der Klemmschraube (26) sowie Befestigungslöchern aufweist.

13. Verwendung einer Profilkonstruktion für Möbel nach einem der Ansprüche 1 bis 12 für einen Tisch oder einen Stuhl oder ein Regal oder ein Bett oder eine Kommode.
